# EUROPÄISCHE PATENTSCHRIFT

(11) **EP 3 507 510 B1**
(45) Veröffentlichungstag und Bekanntmachung des Hinweises auf die Patenterteilung: **09.09.2020**
(21) Anmeldenummer: 17783516.2
(22) Anmeldetag: 13.10.2017
(51) Int. Cl.: F16B 25/00

(54) **BEFESTIGUNGSELEMENT**
ATTACHMENT ELEMENT
ÉLÉMENT DE FIXATION

(30) Priorität: 17.10.2016 EP 16194159
(43) Veröffentlichungstag der Anmeldung: 10.07.2019
(73) Patentinhaber: Bossard AG, 6301 Zug (CH)
(72) Erfinder: PFISTER, Werner, 5608 Stetten (CH)
(74) Vertreter: Rey, Antje Gabriele
(86) Internationale Anmeldenummer: PCT/EP2017/076238
(87) Internationale Veröffentlichungsnummer: WO 2018/073131

(56) Entgegenhaltungen:
- WO-A1-2011/044088
- DE-A1- 19 732 652

## Beschreibung

### Gebiet der Erfindung

Die vorliegende Erfindung betrifft ein Befestigungselement für ein poröses Material und eine Verwendung des Befestigungselements.

### Hintergrund

Bei der Verwendung eines Befestigungselements in einem porösen Material oder einem weichen Holz muss berücksichtigt werden, dass diese Materialen im Innern Hohlräume aufweisen und sich daher in der Umgebung des Aussengewindes des Befestigungselements nur wenig tragfähiges Material befindet, so dass die Tragbarkeit des Materials beschränkt ist.

Werden aus dem Stand der Technik bekannte Befestigungsmittel, insbesondere Schrauben, für ein poröses Material verwendet, führt dies oft dazu, dass die Schraube wegen der geringen Tragbarkeit und der damit verringerten Kraftaufnahme des Materials aus dem Material ausreisst. WO 2011/044088 A1 zeigt ein Befestigungselement für Holzmaterialien.

### Darstellung der Erfindung

Hinsichtlich des bekannten Stands der Technik stellt sich also die Aufgabe, ein Befestigungselement bereitzustellen, welches sich für die Verwendung in porösen Materialien sowie in weichen Hölzern eignet und beim Einschrauben in diese Materialien eine sichere Verbindung gewährleistet.

Diese Aufgabe wird durch ein Befestigungselement gemäss Anspruch 1 gelöst.

Dementsprechend enthält das erfindungsgemässe Befestigungselement einen Befestigungskopf, welcher zur Aufnahme eines Drehmoments in beide Rotationsrichtungen, also im Uhrzeigersinn und im Gegenuhrzeigersinn, um eine Hauptachse ausgebildet ist. Ausserdem enthält das Befestigungselement einen Schaft, welcher sich vom Befestigungskopf aus entlang der Hauptachse erstreckt und am vom Befestigungskopf abgewandten Ende in einer Spitze endet. Der Schaft enthält über mindestens einen Teil seiner Erstreckung in Richtung der Hauptachse ein Aussengewinde zum Eindrehen des Befestigungselements in ein poröses Material, welches insbesondere ein Balsaholz ist.

Ein Aussendurchmesser D des Aussengewindes, insbesondere der grösste Aussendurchmesser D des Aussengewindes, ist im Verhältnis zum Kerndurchmesser d des Aussengewindes über mindestens einen Teil der Erstreckung des Aussengewindes in Richtung der Hauptachse in einem Verhältnis von D/d > 2.5 ausgebildet, es kann aber, insbesondere für Balsaholz, auch D/d > 2.8 sein. Vorzugsweise ist das Verhältnis 3 > D/d > 2.5.

Der Aussendurchmesser bezeichnet den äusseren Durchmesser des Gewindes im Querschnitt, an der Gewindespitze gemessen. Der Kerndurchmesser bezeichnet den Durchmesser des Gewindes im Querschnitt auf dem Gewindegrund gemessen.

Vorzugsweise beträgt der Aussendurchmesser des Aussengewindes zwischen 4 mm und 5 mm und/oder der Kerndurchmesser des Aussengewindes zwischen 1 mm und 2mm.

Vorzugsweise ist der Kerndurchmesser d des Aussengewindes über die gesamte Länge des Aussengewindes gleich gross.

Das Aussengewinde weist eine zum Befestigungskopf hin ausgerichtete erste Gewindeflanke und eine vom Befestigungskopf weg gerichtete zweite Gewindeflanke auf.

Das Gewindeprofil der zweiten Gewindeflanke hat einen Knick. Dadurch ergeben sich ein erster Abschnitt der zweiten Gewindeflanke zwischen Knick und Gewindegrund und ein zweiter Abschnitt der zweiten Gewindeflanke zwischen Knick und Gewindespitze.

Ein erster Winkel zwischen der ersten Gewindeflanke und dem ersten Abschnitt der zweiten Gewindeflanke ist grösser als ein zweiter Winkel zwischen der ersten Gewindeflanke und dem zweiten Gewindeabschnitt der zweiten Gewindeflanke.

Vorzugsweise ist ausschliesslich entlang der zweiten Gewindeflanke einen Knick ausgebildet, so dass der Knick durchgehend nur auf einer Seite des Gewindes angeordnet ist.

Die erste Gewindeflanke ist vorzugsweise ohne Knick ausgebildet. Das heisst, dass ein Winkel zwischen der ersten Gewindeflanke und dem Gewindegrund über das ganze Gewindeprofil der ersten Gewindeflanke von der Gewindespitze bis zum Gewindegrund konstant ist.

Das Gewinde ist vorzugsweise derart ausgestaltet, dass es durch drei Winkel bestimmt wird. Diese drei Winkel sind der Winkel zwischen dem Gewindegrund und der ersten Gewindeflanke, der Winkel zwischen dem Gewindegrund und dem ersten Abschnitt der zweiten Gewindeflanke und der Winkel zwischen dem Gewindegrund und dem zweiten Abschnitt der zweiten Gewindeflanke.

In einer weiteren bevorzugten Ausführungsform des Befestigungselements sind die erste Gewindeflanke und die zweite Gewindeflanke so ausgebildet, dass der erste Winkel zwischen 45° und 65° beträgt und vorzugsweise zwischen 55° und 60°. Der zweite Winkel kann zwischen 20° und 40° betragen und vorzugsweise zwischen 30° und 35°.

Vorzugsweise ist das Aussengewinde des erfindungsgemässen Befestigungselements als ein selbstfurchendes Gewinde ausgebildet, so dass sich das Befestigungselement beim Eindrehen ein Gewinde in das Material formt.

Das Gewinde ist vorzugsweise als eingängiges Gewinde mit einem Gewindegang ausgebildet, es kann aber auch als mehrgängiges Gewinde mit mehreren Gewindegängen ausgebildet sein.

Erfindungsgemäß sich der Abschnitt des Schafts, welcher das Aussengewinde enthält bis zur Spitze des Befestigungselements. Das heisst, das Aussengewinde ist bis zur Spitze des Elements ausgebildet und bildet in der Nähe der Spitze den Gewindeauslauf des Aussengewindes. Vorzugsweise verringert sich in einem Bereich des

Schafts nahe der Spitze der Aussendurchmesser des Aussengewindes. Insbesondere ist der Aussendurchmesser des Gewindeauslaufs des Aussengewindes nahe der Spitze mehr als 20%, insbesondere mehr als 50% kleiner als der maximale Aussendurchmesser des Gewindes.

Die Gewindesteigung s des Aussengewindes D ist vorzugsweise zwischen 1.5 mm und 2 mm.

Das Verhältnis von Aussendurchmesser D zu Gewindesteigung s zu ist in einer Ausführungsform 2 < D/s < 3, insbesondere D/s = 2.5.

Bei einem bevorzugten Befestigungselement beträgt eine Länge des Schafts von einem dem Befestigungskopf zugewandten Ende bis zur Spitze des Befestigungselements zwischen 10 mm und 25 mm.

Ausserdem enthält das Befestigungselement vorzugsweise Stahl, Aluminium oder faserverstärkten Kunststoff. Insbesondere ist es einteilig aus einem dieser Materialien ausgebildet. Das Element kann in einer anderen Ausführungsform auch eine Kombination der erwähnten Materialen enthalten, zum Beispiel kann der Befestigungskopf aus einem anderen Material sein als der Schaft oder als der Abschnitts des Schafts, welcher das Gewinde aufweist.

In einer weiteren Ausführungsform des Befestigungselements kann sich das Aussengewinde über den ganzen Schaft von der Spitze bis zum Befestigungskopf erstrecken. Vorzugsweise erstreckt sich das Aussengewinde nur über einen Teil, beziehungsweise über einen Abschnitt des Schafts, so dass sich zwischen dem Befestigungskopf und dem Abschnitt des Schafts, welcher als Aussengewinde ausgebildet ist, ein gewindeloser Abschnitt ergibt.

Insbesondere kann ein Durchmesser des gewindelosen Abschnitts in etwa gleich dem grössten Aussendurchmesser des Aussengewindes sein.

Ausserdem kann ein Durchmesser des gewindelosen Abschnitts kleiner sein als ein Durchmesser des Befestigungskopfs, insbesondere 20%, 30% oder 40% kleiner.

Der Befestigungskopf des Elements ist so ausgebildet, dass ein Drehmoment darauf einwirken kann, zum Rotieren des Elements in beide Rotationsrichtungen um die Hauptachse. Insbesondere hat der Befestigungskopf dazu eine Aufnahme die so ausgebildet ist, dass sie mit einem zur Aufnahme passenden Werkzeug kontaktiert werden kann, zum Anlegen des Drehmoments. Die Aufnahme kann als Sechskant, Schlitz oder vorzugsweise als Innensechsrund ausgebildet sein.

Der Befestigungskopf kann als Linsenkopf oder Senkkopf ausgebildet sein.

Vorzugsweise ist der Befestigungskopf ausserdem so ausgebildet, dass ein Durchmesser des Kopfs grösser ist als ein Aussendurchmesser des Aussengewindes, insbesondere grösser als der grösste Aussendurchmesser des Aussengewindes. Vorzugsweise ist ein Durchmesser des Befestigungskopfs mehr als 20% grösser als der grösste Aussendurchmesser des Aussengewindes.

Vorzugsweise ist das Befestigungselement eine Schraube und insbesondere eine Holzschraube.

Eine erfindungsgemässe Verwendung des erfindungsgemässen Befestigungselements ist das Eindrehen desselben in das poröse Material.

Vorzugsweise ist das Material ein Balsaholz, geschäumter Kunststoff oder Aluminiumschaum.

Ein weiteres bevorzugtes Material ist ein Material mit einer Dichte ρ von weniger als 1g/cm³ (ρ < 1g/cm³).

Beim Einschrauben des erfindungsgemässen Befestigungselements wird das poröse Material in der Umgebung des Aussengewindes komprimiert, so dass das Material in der Umgebung des Aussengewindes tragbarer wird und das Befestigungselement kraftschlüssig im Material befestigt ist.

Um eine gegenüber dem Stand der Technik sicherere Verbindung zu erwirken, ist insbesondere die erfindungsgemässe Zusammenwirkung des Durchmesserverhältnisses zwischen Kerndurchmesser d und Aussendurchmesser D des Aussengewindes und dem Gewindeprofil des Aussengewindes ausschlaggebend.

Beim Einschrauben in das Material bildet das Aussengewinde ein Gewinde im Material, vorzugsweise durch Umformen, Verdichten oder Einschneiden des Materials.

Durch das Durchmesserverhältnis von D/d > 2.5 bildet das Aussengewinde eine grosse Gewindetiefe, so dass beim Einschrauben des Befestigungselements in ein poröses Material ein grosses Volumen an Material komprimiert wird, was wiederum zu einer hohen Kraftaufnahme des Materials führt, so dass das Befestigungselement höher belastet werden kann als wenn ein kleineres Materialvolumen komprimiert wird.

Um das Einschrauben des erfindungsgemässen Befestigungselements mit dem Durchmesserverhältnis D/d > 2.5 in ein Material zu erleichtern, hat das Aussengewinde das erfindungsgemässe Gewindeprofil mit einer ersten Gewindeflanke und einer zweiten Gewindeflanke mit einem Knick, welcher die zweite Gewindeflanke in den ersten und den zweiten Abschnitt unterteilt. Die erfindungsgemässe Ausgestaltung der Gewindeflanken, insbesondere der beiden Abschnitte der zweiten Gewindeflanke führt dazu, dass beim Einschrauben des Befestigungsmittels das Material in der Umgebung des Aussengewindes und insbesondere in der Umgebung des Gewindegrunds des Aussengewindes verdichtet wird, zum Erleichtern des Einschraubens des Befestigungselements.

Das erfindungsgemässe Befestigungselement ist für eine Vorrichtung, welche insbesondere poröse Materialien umfasst, ein wesentliches Element. Es dient vorzugsweise der sicheren Verbindung einzelner Bauteile der Vorrichtung und ermöglicht dadurch die Funktionalität der Vorrichtung.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Fig. 1 eine Vorderansicht des Befestigungsmittels gemäss einer Ausführungsform der Erfindung;
Fig. 2 eine Seitenansicht des Befestigungsmittels aus Fig. 1 gemäss einer Ausführungsform der Erfindung; und
Fig. 3 einen Querschnitt einer Detailansicht des Ausschnitts A aus Fig. 1 gemäss einer Ausführungsform der Erfindung.

### Weg(e) zur Ausführung der Erfindung

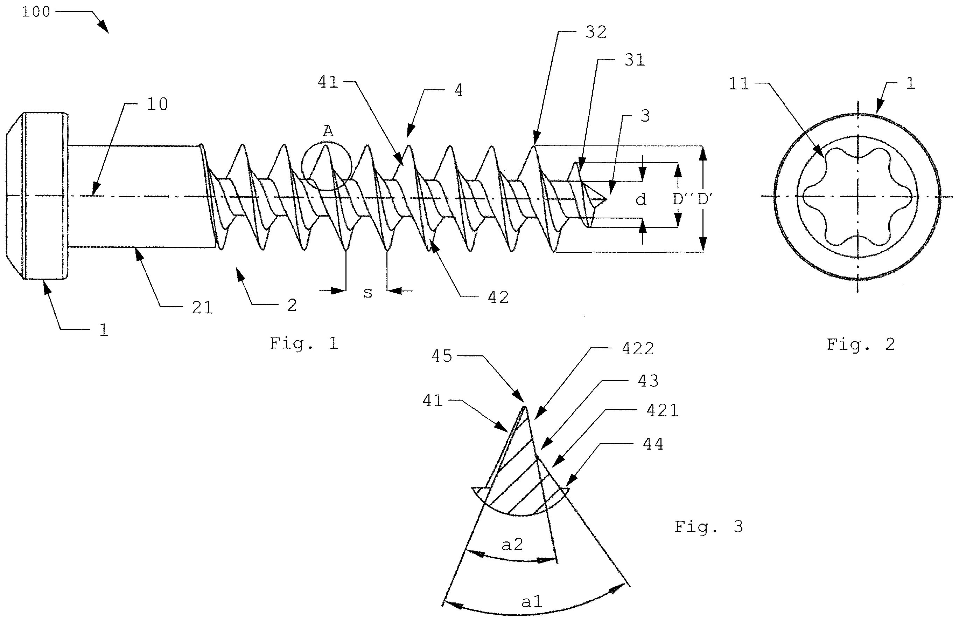

Fig. 1 zeigt eine Ausführungsform des erfindungsgemässen Befestigungselements 100 mit einem Befestigungskopf 1 und einem Schaft 2, welcher sich vom Befestigungskopf 1 aus in Richtung einer Hauptachse 10 erstreckt und am vom Befestigungskopf 1 abgewandten Ende in einer Spitze 3 endet.

Eine Länge des Schafts 2 von einem Ende des Schafts 2, dass sich aus dem Befestigungskopf 2 erstreckt bis zur Spitze 3 beträgt vorzugsweise ca. 22 mm oder ca. 25 mm.

Der Schaft 2 weist über einen Teil seiner Erstreckung in Richtung der Hauptachse 10 ein Aussengewinde 4 auf. Das Aussengewinde 4 ist in der abgebildeten Ausführungsform ein rechtssteigendes Gewinde, das heisst, dass bei Aufsicht auf das Gewinde die Gewindegänge nach rechts ansteigen und das Befestigungselement daher im Uhrzeigersinn in ein Material eingedreht wird. Das Aussengewinde 4 kann aber in einer anderen Ausführungsform auch ein linksteigendes Gewinde sein, welches im Gegenuhrzeigersinn in ein Material eingedreht wird.

Ein Durchmesser D des Aussengewindes, insbesondere der grösste Durchmesser D' des Aussengewindes 4, auch Nenndurchmesser genannt, ist im Verhältnis zum Kerndurchmesser d des Gewindes 4 über mindestens einen Teil der Erstreckung des Gewindes 4 entlang des Schafts 2 in Richtung der Hauptachse 10 in einem Verhältnis von D/d > 2.5 oder D/d > 2.8 oder 3 > D/d > 2.5. ausgebildet.

Der grösste Aussendurchmesser D' des Gewindes ist vorzugsweise ca. 4.2 mm. Der Kerndurchmesser d des Gewindes ist vorzugsweise ca. 1.5 mm.

Ein Verhältnis des grössten Aussendurchmessers D' und der Gewindesteigung s beträgt vorzugsweise 2.5.

Das Aussengewinde 4 weist eine zum Befestigungskopf 1 hin ausgerichtete erste Gewindeflanke 41 und einem vom Befestigungskopf 1 weg gerichtete zweite Gewindeflanke 42, welche in Richtung der Spitze 3 ausgerichtet ist, auf.

Der Abschnitt des Schafts 2, welcher als Aussengewinde 4 ausgebildet ist, erstreckt sich bis zur Spitze 3. Zur Spitze hin nimmt der Aussendurchmesser D des Aussengewindes 4 ab und ist kleiner als der grösste Aussendurchmesser D' des Aussengewindes. Der Aussendurchmesser D" des letzten Gewindegangs 31 des Aussengewindes 4 vor der Spitze 3 kann ca. 50% kleiner sein als der grösste Aussendurchmesser D' des Gewindes 4.

Ausserdem kann ein Abstand, der sogenannte Gewindeauslauf, zwischen der Spitze 3 und demjenigen Gewindegang 32 des Aussengewindes 4, welcher am nächsten zur Spitzte 3 angeordnet ist und einen Aussendurchmesser D hat, der dem grössten Aussendurchmesser D' des Gewindes 4 entspricht, etwa 3 mm betragen.

Der Kerndurchmesser d ist über die ganze Erstreckung des Aussengewindes 4 immer gleich gross.

Zwischen dem Befestigungskopf 1 und dem Aussengewinde 4 erstreckt sich in Richtung der Hauptachse 10 ein gewindeloser Abschnitt 21 des Schafts 2.

Dieser gewindelose Abschnitt 21 kann insbesondere eine Länge von ca. 6 mm haben. Insbesondere kann ein Durchmesser des gewindelosen Abschnitts 21 in etwa dem grössten Aussendurchmesser D' des Aussengewindes 4 entsprechen. Ein Durchmesser des gewindelosen Abschnitts 21 kann aber in einer anderen Ausführungsform auch kleiner als der grösste Aussendurchmesser D' des Aussengewindes 4 sein.

Insbesondere ist ein Durchmesser des gewindelosen Abschnitts 21 des Schafts 2 kleiner als ein Durchmesser des Befestigungskopfs 1.

Das Befestigungselement kann in beide Richtungen um die Hauptachse rotiert werden. Für die in Fig. 1 abgebildete Ausführungsform der Schraube, welche ein rechtssteigendes Gewinde hat, wird das Element durch Rotation im Uhrzeigersinn in ein Material eingeschraubt, wobei eine Rotation im Gegenuhrzeigersinn das Lösen der Schraube aus dem Material ermöglicht.

Fig. 2 zeigt eine Seitenansicht des Befestigungselements 100 aus Fig. 1. Dabei ist der Befestigungskopf 1 abgebildet, wobei die Hauptachse 10 in die Zeichenebene hinein gerichtet ist.

Der Befestigungskopf ist dazu ausgebildet, dass ein Drehmoment bzw. eine Drehkraft angelegt werden kann, damit das Befestigungselement um die Hauptachse rotiert werden kann. Dazu enthält der Befestigungskopf eine Aufnahme für ein Werkzeug, mit welchem das Drehmoment angelegt werden kann. Insbesondere ist diese Aufnahme als Innensechsrund 11 ausgebildet wie in Fig. 2 gezeigt.

Fig. 3 zeigt den Querschnitt des Aussengewindes 4 in Ausschnitt A aus Fig. 1. Das Gewindeprofil der zweiten Gewindeflanke 42 hat einen Knick 43, welcher die zweite Gewindeflanke 42 in einen ersten Abschnitt 421 zwischen Gewindegrund 44 und Knick 43 und einen zweiten Abschnitt 422 zwischen Knick 43 und Gewindespitze 45 unterteilt. Ein erster Winkel a1 zwischen der ersten Gewindeflanke 41 und dem ersten Abschnitt 421 der zweiten Gewindeflanke 42 ist grösser als ein zweiter Winkel a2 zwischen der ersten Gewindeflanke 41 und dem zweiten Abschnitt 422 der zweiten Gewindeflanke 42. Der erste Winkel a1 ist vorzugsweise ca. 40%, 50% oder 60% grösser als der zweite Winkel a2. Insbesondere ist der erste Winkel a1 ca. 60° und der zweite Winkel a2 ca. 30°.

Der in Fig. 3 gezeigte Querschnitt des Aussengewindes 4 ist vorzugsweise über die ganze Erstreckung der nutzbaren Gewindelänge des Aussengewindes ausgebildet. In den Gewindeausläufen des Aussengewindes 4 nahe der Spitze 3 und nahe des Befestigungskopfs 1 kann sich der Querschnitt und insbesondere das Gewindeprofil von demjenigen in Fig. 3 unterscheiden.

Während in der vorliegenden Anmeldung bevorzugte Ausführungen der Erfindung beschrieben sind, ist klar darauf hinzuweisen, dass die Erfindung nicht auf diese beschränkt ist und auch in anderer Weise innerhalb des Umfangs der folgenden Ansprüche ausgeführt werden kann.

## Patentansprüche

1. Befestigungselement (100) für ein poröses Material, insbesondere Balsaholz, enthaltend
einen Befestigungskopf (1) ausgebildet zur Aufnahme eines Drehmoments in beide Rotationsrichtungen um eine Hauptachse (10),
einen Schaft (2), welcher sich vom Befestigungskopf (1) aus erstreckt und am vom Befestigungskopf abgewandten Ende in einer Spitze (3) endet,
wobei der Schaft (2) über mindestens einen Teil seiner Erstreckung in Richtung der Hauptachse ein Aussengewinde (4) zum Eindrehen des Befestigungselements (100) in das Material aufweist,
wobei ein Aussendurchmesser (D) des Aussengewindes (4) im Verhältnis zum Kerndurchmesser (d) des Aussengewindes (4) über mindestens einen Teil seiner Erstreckung in Richtung der Hauptachse (10) in einem Verhältnis von D/d > 2.5 ausgebildet ist,
wobei das Aussengewinde (4) eine zum Befestigungskopf hin ausgerichtete erste Gewindeflanke (41) und eine vom Befestigungskopf weg gerichtete zweite Gewindeflanke (42) aufweist,
wobei sich das Aussengewinde (4) bis zur Spitze (45) hin erstreckt und wobei insbesondere der Aussendurchmesser (D) des Aussengewindes (4) zur Spitze (45) hin abnimmt,
wobei das Gewindeprofil der zweiten Gewindeflanke (42) einen Knick (43) hat, so dass ein erster Winkel (a1) zwischen der ersten Gewindeflanke (41) und einem ersten Abschnitt (421) der zweiten Gewindeflanke (42) zwischen Knick (43) und Gewindegrund (44) grösser ist als ein zweiter Winkel (a2) zwischen der ersten Gewindeflanke (41) und einem zweiten Abschnitt (422) der zweiten Gewindeflanke (42) zwischen Knick (43) und Gewindespitze (45).

2. Befestigungselement (100) nach Anspruch 1, wobei das Aussengewinde (4) ein selbstfurchendes Gewinde ist, zur Umformung des Materials beim Eindrehen des Befestigungselements (100) ins Material.

3. Befestigungselement (100) nach einem der vorhergehenden Ansprüche, wobei der Kerndurchmesser (d) des Aussengewindes (4) über die gesamte Länge des Aussengewindes (4) gleich gross ist.

4. Befestigungselement (100) nach einem der vorhergehenden Ansprüche,
wobei ein Winkel zwischen der ersten Gewindeflanke und dem Gewindegrund über das ganze Gewindeprofil der ersten Gewindeflanke konstant ist.

5. Befestigungselement (100) nach einem der vorhergehenden Ansprüche,
wobei der erste Winkel (a1) zwischen 45° und 65° beträgt, insbesondere zwischen 55° und 60° und/oder
wobei der zweite Winkel (a2) zwischen 20° und 40° beträgt, insbesondere zwischen 30° und 35°.

6. Befestigungselement (100) nach einem der vorhergehenden Ansprüche, mit D/d > 2.8.

7. Befestigungselement (100) nach einem der vorhergehenden Ansprüche
wobei der Aussendurchmesser (D) des Aussengewindes (4) zwischen 4 mm und 5 mm beträgt und/oder
wobei der Kerndurchmesser (d) des Aussengewindes (4) zwischen 1 mm und 2 mm beträgt.

8. Befestigungselement (100) nach einem der vorhergehenden Ansprüche wobei die Gewindesteigung zwischen 1.5 mm und 2 mm beträgt.

9. Befestigungselement (100) nach einem der vorhergehenden Ansprüche, wobei eine Länge des Schafts (2) von einem dem Befestigungskopf (1) zugewandten Ende bis zur Spitze (3) zwischen 10 mm und 25 mm beträgt.

10. Befestigungselement (100) nach einem der vorhergehenden Ansprüche, welches Stahl, Aluminium, faserverstärkten Kunststoff oder eine Kombination davon enthält.

11. Befestigungselement (100) nach einem der vorhergehenden Ansprüche wobei die Aufnahme des Drehmoments des Befestigungskopfes (1) als Innensechsrund (11) ausgebildet ist.

12. Befestigungselement (100) nach einem der vorhergehenden Ansprüche, wobei ein Durchmesser des Befestigungskopfs (1) grösser ist als der Aussendurchmesser (D) des Aussengewindes (4).

13. Befestigungselement (100) nach einem der vorhergehenden Ansprüche, wobei das Verhältnis von Aussendurchmesser D zu Gewindesteigung s dem Verhältnis 2 < D/s < 3, insbesondere D/s = 2.5 entspricht.

14. Verwendung des Befestigungselements (100) nach einem der vorhergehenden Ansprüche zum Eindrehen in das poröse Material.

15. Verwendung nach Anspruch 14 wobei das poröse Material Balsaholz, geschäumter Kunststoff oder Aluminiumschaum ist.

16. Verwendung nach Anspruch 14 wobei das poröse Material eine Dichte ρ von ρ < 1g/cm³ hat.

## Claims

1. Fastening element (100) for a porous material, in particular for balsa wood, comprising
a fastening head (1) configured to receive a torque in both rotational directions around a main axis (10),
a shank (2) extending from the fastening head (1) and ending in a tip (3) at the end facing away from the fastening head,
wherein the shank (2) has an outer thread (4) along at least a section of its extension in a direction of the main axis, for screwing the fastening element (100) into the material,
wherein the ratio of the outer diameter (D) of the outer thread (4) along at least a section of its extension in a direction of the main axis (10) and the core diameter (d) of the outer thread (4) is D/d > 2.5,
wherein the outer thread (4) has a first thread flank (41) facing the fastening head and a second thread flank (42) facing away from the fastening head,
wherein the outer thread (4) extends up to the tip (45) and wherein particularly the outer diameter (D) of the outer thread (4) decreases towards the tip (45),
wherein the thread profile of the second thread flank (42) has a kink (43) such that a first angle (a1) between the first thread flank (41) and a first section (421) of the second thread flank (42) is larger between the kink (43) and a thread base (44) than a second angle (a2) between the first thread flank (41) and a second section (422) of the second thread flank (42) between the kink (43) and a thread tip (45).

2. Fastening element (100) according to claim 1, wherein the outer thread (4) is a self-tapping thread, for forming the material when screwing the fastening element (100) into the material.

3. Fastening element (100) according to any one of the preceding claims, wherein the core diameter (d) of the outer thread (4) remains the same along the total length of the outer thread (4).

4. Fastening element (100) according to any one of the preceding claims,
wherein an angle between the first thread flank and the thread base is constant along the whole thread profile of the first thread flank.

5. Fastening element (100) according to any one of the preceding claims,
wherein the first angle (a1) is between 45° and 65°, in particular between 55° and 60° and/or
wherein the second angle (a2) is between 20° and 40°, in particular between 30° and 35°.

6. Fastening element (100) according to any one of the preceding claims, with D/d > 2.8.

7. Fastening element (100) according to any one of the preceding claims,
wherein the outer diameter (D) of the outer thread (4) is between 4 mm and 5 mm and/or
wherein the core diameter (d) of the outer thread (4) is between 1 mm and 2 mm.

8. Fastening element (100) according to any one of the preceding claims, wherein the thread pitch is between 1.5 mm and 2 mm.

9. Fastening element (100) according to any one of the preceding claims, wherein a length of the shank (2) from an end facing the fastening head (1) to the tip (3) is between 10 mm and 25 mm.

10. Fastening element (100) according to any one of the preceding claims, comprising steel, aluminium, fiber-reinforced plastic, or a combination thereof.

11. Fastening element (100) according to any one of the preceding claims, wherein the reception of the torque of the fastening head (1) is formed as a hexalobular socket.

12. Fastening element (100) according to any one of the preceding claims, wherein a diameter of the fastening head (1) is larger than the outer diameter (D) of the outer thread (4).

13. Fastening element (100) according to any one of the preceding claims, wherein the ratio of the outer diameter D and the thread pitch s is 2 < D/s < 3, in particular is D/s = 2.5.

14. Use of the fastening element (100) according to any one of the preceding claims for screwing into the porous material.

15. Use according to claim 15 wherein the porous material is balsa wood, foamed plastic, or aluminium foam.

16. Use according to claim 15, wherein the porous material has a density ρ of ρ < 1 g/cm³.

## Revendications

1. Elément de fixation (100) pour une matériau poreux, en particulier pour le bois de balsa, comprenant
une tête de fixation (1) configurée pour recevoir un couple dans les deux sens de rotation autour d'un axe principal (10),
une tige (2) s'étendant à partir de la tête de fixation (1) et se terminant par une pointe (3) à l'extrémité opposée à la tête de fixation,
la tige (2) présentant un filetage extérieur (4) le long d'au moins une partie de son extension dans une direction de l'axe principal, pour visser l'élément de fixation (100) dans le matériau,
le rapport entre un diamètre extérieur (D) du filetage extérieur (4) et le diamètre de noyau (d) du filetage extérieur (4) le long d'au moins une section de son extension dans une direction de l'axe principal (10) étant D/d > 2,5,
le filetage extérieur (4) présentant un premier flanc de filet (41) tourné vers la tête de fixation et un second flanc de filet (42) tourné à l'opposé de la tête de fixation,
le filetage extérieur (4) s'étendant jusqu'à la pointe (45) et particulièrement le diamètre extérieur (D) du filetage extérieur (4) décroissant vers la pointe (45),
le profil de filetage du deuxième flanc de filetage (42) présentant un coude (43) tel qu'un premier angle (a1) entre le premier flanc de filetage (41) et une première section (421) du deuxième flanc de filetage (42) est plus grand entre le coude (43) et une base de filetage (44) qu'un deuxième angle (a2) entre le premier flanc de filetage (41) et une deuxième section (422) du deuxième flanc de filetage (42) entre le coude (43) et la pointe de filetage (45).

2. Elément de fixation (100) selon la revendication 1, dans lequel le filetage extérieur (4) est un filetage autotaraudeur, pour former le matériau lors du vissage de l'élément de fixation (100) dans le matériau.

3. Elément de fixation (100) selon l'une quelconque des revendications précédentes, dans lequel le diamètre de noyau (d) du filetage extérieur (4) reste le même sur toute la longueur du filetage extérieur (4).

4. Elément de fixation (100) selon l'une quelconque des revendications précédentes, dans lequel un angle entre le premier flanc du filetage et la base du filetage est constant sur tout le profil du premier flanc du filetage.

5. Elément de fixation (100) selon l'une quelconque des revendications précédentes,
dans lequel le premier angle (a1) est compris entre 45° et 65°, en particulier entre 55° et 60° et/ou
dans lequel le seconde angle (a2) est compris entre 20° et 40°, en particulier entre 30° et 35°.

6. Elément de fixation (100) selon l'une quelconque des revendications précédentes, avec D/d > 2,8.

7. Élément de fixation (100) selon l'une des revendications précédentes,
dans lequel le diamètre extérieur (D) du filetage extérieur (4) est compris entre 4 mm et 5 mm et/ou
dans lequel le diamètre du noyau (d) du filetage extérieur (4) est compris entre 1 mm et 2 mm.

8. Elément de fixation (100) selon l'une quelconque des revendications précédentes, dans lequel le pas de filetage est compris entre 1,5 mm et 2 mm.

9. Elément de fixation (100) selon l'une quelconque des revendications précédentes, dans lequel une longueur de la tige (2) depuis une extrémité faisant face à la tête de fixation (1) jusqu'à la pointe (3) est comprise entre 10 mm et 25 mm.

10. Elément de fixation (100) selon l'une quelconque des revendications précédentes, comprenant de l'acier, de l'aluminium, du plastique renforcé par des fibres, ou une combinaison de ceux-ci.

11. Elément de fixation (100) selon l'une quelconque des revendications précédentes, dans lequel la réception du couple de la tête de fixation (1) est formée comme une douille hexagonale.

12. Elément de fixation (100) selon l'une quelconque des revendications précédentes, dans lequel un diamètre de la tête de fixation (1) est plus grand que le diamètre extérieur (D) du filetage extérieur (4).

13. Elément de fixation (100) selon l'une quelconque des revendications précédentes, dans lequel le rapport entre le diamètre extérieur D et le pas de filetage s est de 2 < D/s < 3, en particulier est D/s = 2,5.

14. Utilisation de l'élément de fixation (100) selon l'une quelconque des revendications précédentes pour le vissage dans le matériau poreux.

15. Utilisation selon la revendication 14, dans laquelle le matériau poreux est du bois de balsa, de la mousse plastique ou de la mousse d'aluminium.

16. Utilisation selon la revendication 15, dans laquelle le matériau poreux a une densité p de ρ < 1 g / cm³.
